# EUROPÄISCHE PATENTSCHRIFT

(11) **EP 0 565 758 B1**
(45) Veröffentlichungstag und Bekanntmachung des Hinweises auf die Patenterteilung: **13.09.1995**
(21) Anmeldenummer: 92106495.2
(22) Anmeldetag: 15.04.1992
(51) Int. Cl.: F16F 9/14

(54) **Vorrichtung zur Dämpfung von bewegten Massen**
Device for damping of moving masses
Dispositif pour l'amortissement de masses en mouvement

(43) Veröffentlichungstag der Anmeldung: 20.10.1993
(73) Patentinhaber: DAUM + PARTNER Maschinenbau GmbH, D-88317 Aichstetten (DE)
(72) Erfinder: Daum, Hans-Jürgen, W-7974 Aichstetten (DE)
(74) Vertreter: Pfister, Helmut, Dipl.-Ing.

(56) Entgegenhaltungen:
- FR-A- 2 441 761
- GB-A- 2 246 185
- PATENT ABSTRACTS OF JAPAN vol. 13, no. 206 (M-826)(3554) 16. Mai 1989 & JPA-01 030 938 (ISHII KOGYO KK) 1. Februar 1989

## Beschreibung

Die Erfindung betrifft eine Vorrichtung zur Dämpfung von Massen, die um eine Achse schwenkbar gelagert sind.

An Arbeitsmaschinen tritt häufig das Problem auf, daß schwenkende bzw. rotierende Massen am Ende ihrer Bewegung zu verzögern bzw. zu dämpfen sind. Es muß also die Bewegungsenergie des Schwenkarmes oder dergleichen vernichtet werden.

Hierzu ist es bekannt, elastische Puffer zu verwenden. Diese Lösung befriedigt jedoch wenig, da die Lebensdauer der Puffer sehr begrenzt ist. Die Puffer müssen die Energie in sich aufnehmen, also in Wärme umwandeln.

Es ist ferner bekannt, die rotierende bzw. schwenkende Bewegung in eine geradlinige Bewegung umzuwandeln und für diese Bewegung geeignete Dämpfer vorzusehen. Die Umwandlung der Schwenkbewegung in eine lineare Bewegung erfordert jedoch getriebeartige Mittel, also einen entsprechenden Aufwand.

Den bekannten Lösungen sind die Nachteile gemeinsam, daß ein relativ großer Platzbedarf notwendig ist, um die erforderliche sanfte Dämpfung der Massen zu erreichen bzw. daß die für die Energieumwandlung notwendigen Teile einem zusätzlich hohen Verschleiß unterliegen.

In der GB-A-2 246 185 ist eine Vorrichtung zur Dämpfung von bewegten Massen beschrieben, die um eine Achse verschwenkbar gelagert sind, wobei die Schwenkwelle mit einem Drehkolben und einem Zylinder für den Drehkolben verbunden ist, mit einer Drosselkammer im Zylinder, die der Drehkolben bei der Schwenkbewegung verkleinert, sowie einem Abströmkanal für das Medium im Zylinder. Die Dämpfung kommt dabei dadurch zustande, daß im Abströmkanal Verengungen vorgesehen sind, die dem durchströmenden Medium einen Widerstand entgegensetzen. Die Schwenkbewegung wirkt jedoch bei der ganzen Drehbewegung des Kolbens.

In der FR-A-2 441 761 ist eine elastische Kupplung beschrieben, die einen Drehschwingungsdämpfer besitzt. Zwischen den beiden Kupplungshälften, die den Dämpfer bilden, findet beim gegenseitigen Verdrehen ein Flüssigkeitsaustausch statt, wobei die Flüssigkeiten durch einen Spalt verdrängt werden. Der Spalt kann dabei Abstufungen aufweisen oder sich auch kontinuierlich verengen, so daß eine fortlaufende, zunehmende Dämpfung erhalten wird. Auch bei dieser Bauweise geht es darum, eine Dämpfung bei der gesamten Drehbewegung der Kupplungsteile gegeneinander zu erhalten.

Der Erfindung liegt die Aufgabe zugrunde, eine Vorrichtung zu schaffen, mit der es möglich ist, eine Dämpfung rotierender bzw. schwenkender Massen in einer Endlage zu schaffen, die wenig Platz beansprucht und nur einem sehr geringen Verschleiß unterworfen ist. Dabei soll die Dämpfung selbst regulierbar sein.

Die Lösung dieser Aufgabe erreicht die Erfindung durch eine Vorrichtung gemäß Anspruch 1.

Bei der Erfindung wird direkt die Schwenkbewegung gedämpft. Durch die Verwendung des hydraulischen Mediums wird kein Verschleiß erhalten, und die entstehende Wärme kann leicht abgeführt werden. Bei der Erfindung wird entweder der Drehkolben oder auch der Zylinder mit der Schwenkwelle verbunden, an der die Massen angreifen, deren Bewegung zu dämpfen ist. In der Regel wird bevorzugt, daß der Drehkolben verschwenkt wird. Es ist aber auch möglich, die Anordnung umzudrehen, den Zylinder zu verschwenken und die Drehwelle ortsfest abzustützen. Die ortsfeste Abstützung kann vorzugsweise mit der Lagerung der Schwenkwelle verbunden sein.

Bei der Erfindung ist es möglich, einen Teil der Schwenkbewegung völlig ungedämpft zu lassen, einen anderen Teil der Schwenkbewegung dagegen zu dämpfen, wobei die Dämpfungswirkung je nach Bedarf veränderbar ist.

Günstig ist es, wenn der Abströmkanal die Drosselkammer mit der Kammer auf der Rückseite des Drehkolbens verbindet. Dadurch läßt sich das System vollständig kapseln.

Günstig ist es, wenn die Verengung in Umfangsrichtung des Drehkolbens veränderbar ist. Dies läßt sich beispielsweise erreichen durch entsprechende Bearbeitung der Verengung oder auch durch Einbau auswechselbarer Teile. Dies gibt eine Möglichkeit, von dem gesamten Schwenkweg denjenigen Teil zu bestimmen, der dem Dämpfungsvorgang unterworfen ist.

Nach einem weiteren Merkmal der Erfindung ist in einem Kanal, der die Kammer an der Rückseite des Drehkolben mit der Drosselkammer verbindet, ein Ventil angeordnet, das nur die Rückströmung des Mediums in die Drosselkammer zuläßt. Dieser Kanal bzw. das Ventil sorgen dafür, daß die Rückwärtsbewegung des Schwenkarmes bzw. der Schwenkwelle ohne Dämpfung möglich wird.

Günstig ist es, wenn der Drehkolben oder der Zylinder mittels einer Verzahnung mit der Welle verbunden ist.

In der Zeichnung ist ein Ausführungsbeispiel der Erfindung schematisch dargestellt. Es zeigen:

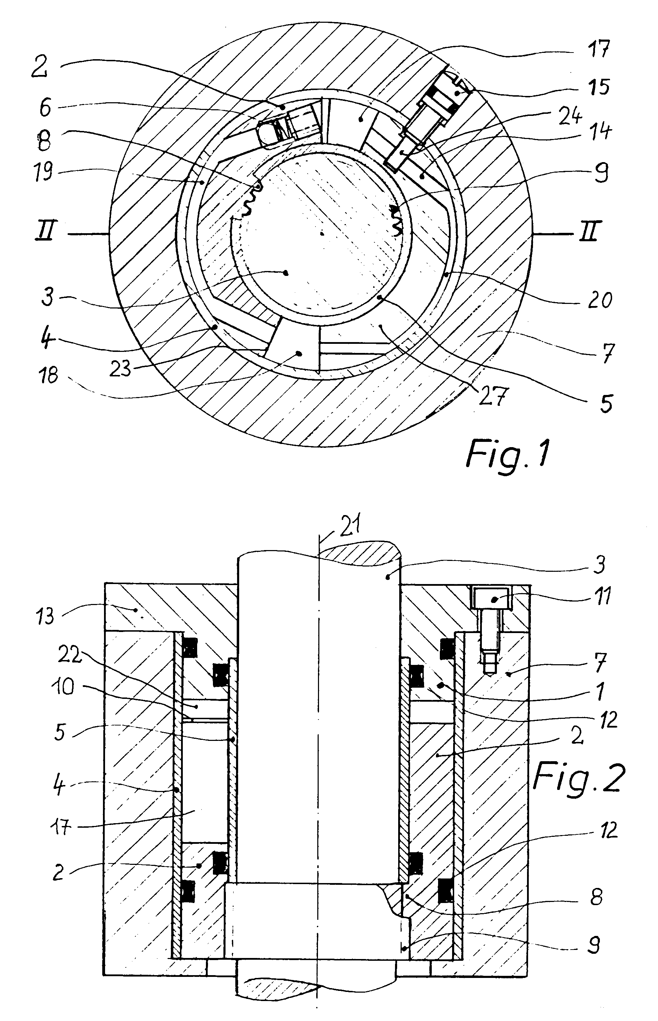

- Fig. 1: einen Querschnitt durch eine erfindungsgemäße Vorrichtung etwa entsprechend der Schnittlinie I-I der Fig. 3,
- Fig. 2: einen Schnitt durch die Darstellung der Fig. 1 entsprechend der Schnittlinie II-II und
- Fig. 3: eine Abwicklung des Zylinders und des Drehkolbens.

Mit der Welle 3, deren Achse mit 21 bezeichnet ist und die die verschwenkende Masse trägt, die nicht näher dargestellt ist, ist durch die Verzahnung 8 und 9 der Drehkolben 2 verbunden. Der Drehkolben 2 nimmt den Kanal 19 mit dem Rückströmventil 6 auf. Dieses Rückströmventil besitzt die Bauweise eines Überdruckventiles mit einer Feder 25 und einer Kugel 26. Es läßt nur eine Rückströmung aus der Kammer 18 in die Kammer 17 zu.

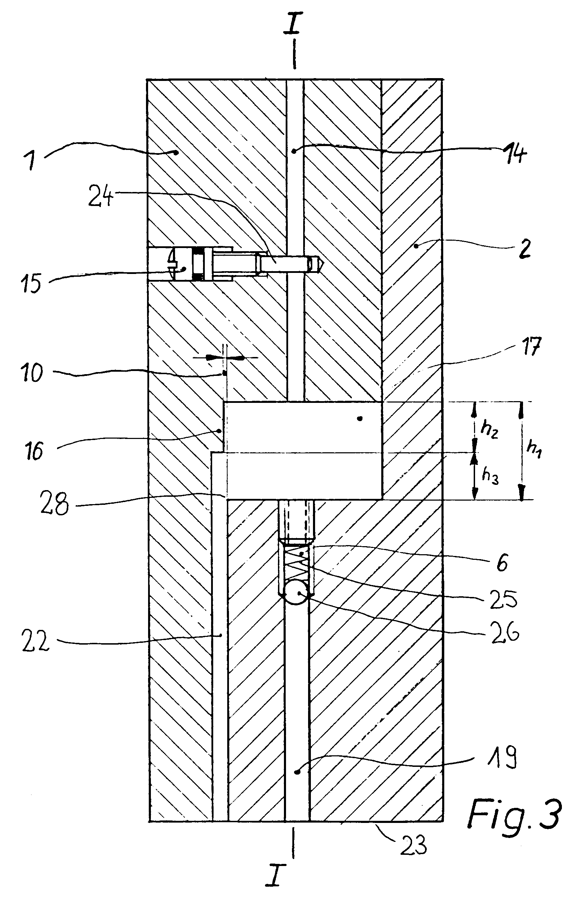

Mit dem Flansch 13, der auf der Welle verdrehbar ist, ist durch die Schraube 11 das Gehäuse 7 des Zylinders verbunden, das den Drehkolben 2 umschließt. Mit dem auf diese Weise gebildeten Zylinder 1 ist der Einsatz 27 verbunden, der die Gegenflächen für die Kammern 17 und 18 bildet. An den Flansch 13 ist das Dämpfungselement 16 angeformt, derart, daß in einer bestimmten Stellung des Drehkolbens die vordere Kante 28 des Drehkolbens mit dem Dämpfungselement 16 zusammenwirkt und eine Verengung 10 bildet, die als Drosselspalt wirkt. Während in der Stellung, die die Abwicklung nach der Fig. 3 zeigt, das Medium ungehindert aus der Drosselkammer 17 in den Kanal 22 und in die Kammer 18 auf der Rückseite 23 des Drehkolbens 2 einströmen kann, wird diese Abströmung dann so behindert, daß sich eine wirksame Dämpfung ergibt.

Der Gesamtweg des Drehkolbens ist in der Fig. 3 mit dem Maß h1 bezeichnet. Dieser Gesamtweg ist in einen Dämpfungsweg h2 aufgeteilt sowie in einen Weg h3, der eine ungehinderte Bewegung der Schwenkwelle 3 zuläßt.

In dem Einsatz 27, der Teil des Zylinders ist, ist ferner ein Kanal aus den Teilen 14 und 20 vorgesehen. In den Kanal 14 ragt dabei ein Sperrschieber 24 hinein, der Teil einer Schraube 15 ist. Mittels der Schraube 15 läßt sich der Kanal 14 durch den Schieber 24 verengen. Hierdurch wird eine Möglichkeit erhalten, dem Medium in der Drosselkammer 17 eine Abströmmöglichkeit zu geben, so daß die Dämpfungswirkung einstellbar ist.

Zwischen dem Gehäuse 7 und dem Drehkolben 2 bzw. dem Einsatz 27 ist noch eine Hülse 4 vorgesehen. Eine weitere Hülse 5 befindet sich innerhalb des Drehkolbens bzw. des Einsatzes. Mit diesen Hülsen wirken die Dichtungen 12 zusammen.

## Patentansprüche

1. Vorrichtung zur Dämpfung der Bewegung von Massen, die um eine Achse (21) schwenkbar gelagert sind, wobei die Schwenkwelle (3) bzw. die zugehörige Lagerung mit einem Drehkolben (2) und mit einem Zylinder (1) für den Drehkolben (2) verbunden sind, mit einer Drosselkammer (17) im Zylinder (1), die der Drehkolben (2) bei der Schwenkbewegung verkleinert, einem Abströmkanal (22) für das Medium im Zylinder und einer Verengung (10) in der Drosselkammer (17), die nach einem vorbestimmten, ungedämpften Schwenkweg (h3) einen Drosselspalt im Abströmkanal (22) bildet, wobei die Verengung (10) einerseits von einem am Zylinder (1) angeformten Dämpfungselement (16) und einer vorderen Kante (28) des Drehkolbens (2) gebildet ist, und mit einer Drosselbohrung (14), die die Drosselkammer (17) mit einer Kammer (18) an der Kolbenrückseite (23) verbindet und in die ein verstellbarer Sperrschieber (24) hineinragt.

2. Vorrichtung nach Anspruch 1**, dadurch gekennzeichnet, daß** der Abströmkanal (22) die Drosselkammer (17) mit der Kammer (18) an der Rückseite (23) des Drehkolbens (2) verbindet.

3. Vorrichtung nach einem oder beiden der vorhergehenden Ansprüche, **dadurch gekennzeichnet, daß** in einem Kanal (19), der die Kammer (18) an der Rückseite (23) des Drehkolbens (2) mit der Drosselkammer (17) verbindet, ein Ventil (6) angeordnet ist, das nur die Rückströmung des Mediums in die Drosselkammer (17) zuläßt.

4. Vorrichtung nach einem oder mehreren der vorhergehenden Ansprüche, **dadurch gekennzeichnet, daß** die Verengung (10) in Umfangsrichtung des Drehkolbens (2) veränderbar ist.

## Claims

1. Apparatus for damping the movement of a mass mounted for pivoting around an axis (21), the pivoting shaft (3) and/or the corresponding bearing element being connected to a rotary piston (2) and a cylinder (1) for said rotary piston (2), comprising a flow control chamber (17) in the cylinder (1) which is reduced in size during the pivoting movement by the rotary piston (2), a discharge canal (22) for the fluid in the cylinder and a narrow part (10) in the flow control chamber (17) forming a flow control gap in the discharge canal (22) according to a predetermined, non damped pivoting path (h3), said narrow part (10) being constituted on the one hand by a damping element (16) formed on the cylinder (1) and by a front edge (28) of the rotary piston (2), and comprising a flow control bore hole (14) connecting the flow control chamber (17) to a chamber (18) on the rear end of the piston (23) and into which bore hole extends an adjustable blocking slide (24).

2. Apparatus according to claim 1, **characterized in that** the discharge canal (22) connects the flow control chamber (17) to the chamber (18) provided on the rear end (23) of the rotary piston (2).

3. Apparatus according to one or both of the preceding claims, **characterized in that** in a canal (19) connecting the chamber (18) on the rear end (23) of the rotary piston (2) to the flow control chamber (17) a valve (6) is arranged permitting the fluid to flow back only into the flow control chamber (17).

4. Apparatus according to one or several of the preceding claims, **characterized in that** the narrow part (10) is capable of being modified in the direction of circumference of the rotary piston (2).

## Revendications

1. Appareillage pour l'amortissement du mouvement de masses, qui sont montées oscillantes autour d'un axe (21), l'axe de pivotement (3) ou le palier correspondant étant liés par un piston tournant (2) et par un cylindre (1) recevant le piston tournant (2), avec une chambre à volume variable (17) dans le cylindre (1) que le piston (2) réduit lors du mouvement de pivotement, un canal d'évacuation (22) pour le fluide dans le cylindre et un étranglement (10) dans la chambre à volume variable (17), qui après une course de pivotement (h3) prédéfinie et non-amortie forme un espace d'étranglement dans le canal d'évacuation (22), l'étranglement (10) étant constitué d'une part par un élément d'amortissement (16) formé dans le cylindre (1) et par une arête antérieure (28) du piston tournant (2), et avec un perçage d'étranglement (14) qui relie la chambre d'étranglement (17) à une chambre (18) sur la face arrière du piston (23) et dans lequel s'engage une tige d'obturation (24).

2. Appareillage suivant la revendication 1 **caractérisé en ce que** le canal d'évacuation (22) relie la chambre à volume variable (17) avec la chambre (18) à la face arrière (23) du piston tournant (2).

3. Appareillage suivant l'une des revendications précédentes ou les deux **caractérisé en ce** que dans un canal (19), qui relie la chambre (18) sur l'arrière (23) du piston tournant (2) à la chambre à volume variable (17), est monté un clapet (6), qui ne permet le retour du fluide que dans la chambre à volume variable (17).

4. Appareillage suivant l'une ou plusieurs des revendications précédentes **caractérisé en ce que** l'étranglement (10) est modifiable dans le sens de la circonférence du piston tournant (2).
